# EUROPÄISCHE PATENTSCHRIFT

(11) **EP 2 262 617 B1**
(45) Veröffentlichungstag und Bekanntmachung des Hinweises auf die Patenterteilung: **20.07.2016**
(21) Anmeldenummer: 08873714.3
(22) Anmeldetag: 19.11.2008
(51) Int. Cl.: B25D 17/24, F16F 7/10

(54) **GEGENSCHWINGUNGSVORRICHTUNG UND VERFAHREN ZU EINER ZUMINDEST TEILWEISEN KOMPENSATION EINER SCHWINGUNGSKENNGRÖSSE FÜR EINE GEGENSCHWINGUNGSVORRICHTUNG EINER ELEKTROWERKZEUGMASCHINE**
COUNTER-VIBRATION DEVICE AND PROCESS FOR AT LEAST PARTIALLY COMPENSATING A VIBRATION PARAMETER FOR A COUNTER-VIBRATION DEVICE OF A POWER TOOL
DISPOSITIF ANTI-VIBRATOIRE ET PROCÉDÉ POUR COMPENSER AU MOINS PARTIELLEMENT UN PARAMÈTRE VIBRATOIRE POUR UN DISPOSITIF ANTI-VIBRATOIRE D'UN OUTIL ÉLECTRIQUE

(30) Priorität: 01.04.2008 DE 102008000908
(43) Veröffentlichungstag der Anmeldung: 22.12.2010
(73) Patentinhaber: Robert Bosch GmbH, 70442 Stuttgart (DE)
(72) Erfinder: SCHNITZLER, Johannes, 72768 Reutlingen (DE); KOEPF, Christian, 73770 Denkendorf (DE); KUESPERT, Klaus, 70771 Leinfelden-Echterdingen (DE)
(86) Internationale Anmeldenummer: PCT/EP2008/065782
(87) Internationale Veröffentlichungsnummer: WO 2009/121430

(56) Entgegenhaltungen:
- EP-A- 1 201 959
- EP-A- 1 736 284
- DE-A1- 10 237 793
- DE-A1- 10 245 885
- DE-A1-102004 001 548
- DE-C1- 19 502 030

## Beschreibung

### Stand der Technik

Die Erfindung geht aus von einer Gegenschwingungsvorrichtung nach dem Oberbegriff des Anspruchs 1, und von ein Verfahren zu einer zumindest teilweisen Kompensation einer Schwingungskenngröße für einer Gegenschwingungsvorrichtung einer Elektrowerkzeugmaschine nach dem Oberbegriff des Anspruchs 6.

Eine derartige Gegenschwingungsvorrichtung und ein derartiges Verfahren sind aus der EP 1 736 284 A1 bekannt.

### Erfindung

Gemäß der vorliegenden Erfindung werden eine Gegenschwingungsvorrichtung gemäß Anspruch 1 und ein Verfahren zu einer zumindest teilweisen Kompensation einer Schwingungskenngröße für eine Gegenschwingungsvorrichtung einer Elektrowerkzeugmaschine gemäß Anspruch 6 zur Verfügung gestellt. Vorteilhafte Ausführungsformen sind in den abhängigen Ansprüchen angegeben.

### Zeichnung

Weitere Vorteile ergeben sich aus der folgenden Zeichnungsbeschreibung. In der Zeichnung ist ein Ausführungsbeispiel der Erfindung dargestellt.

Es zeigen:
- Fig. 1: eine von einem Bohrhammer gebildete Elektrowerkzeugmaschine mit einer erfindungsgemäßen Gegenschwingungsvorrichtung in einer schematischen Darstellung und
- Fig. 2: ein von der Steuereinheit gesteuertes Gegenschwingungsprofil aufgetragen gegen ein Schwingungsprofil der Elektrowerkzeugmaschine.

### Beschreibung des Ausführungsbeispiels

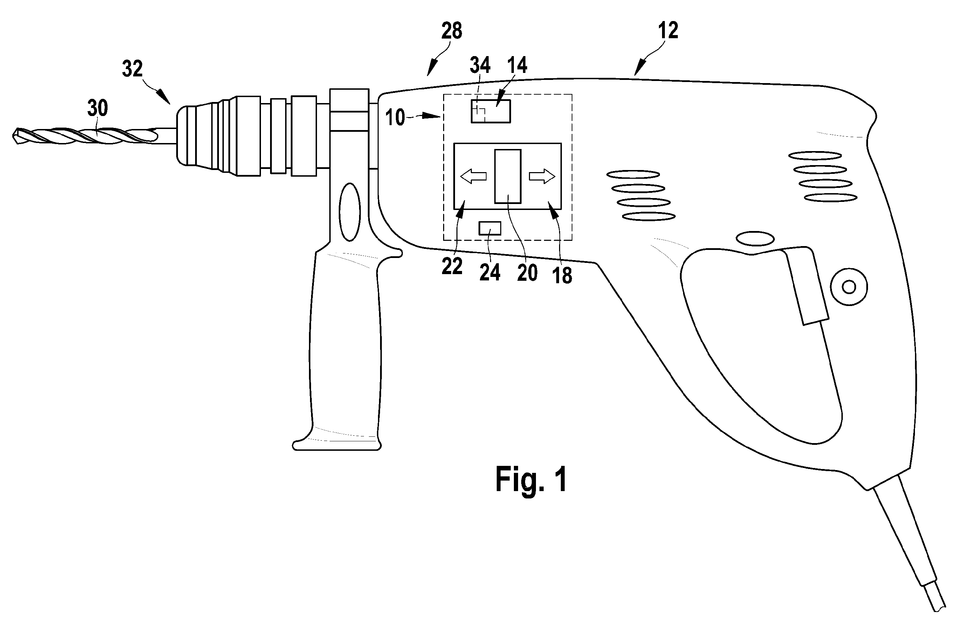

In Figur 1 ist eine von einem Bohrhammer 28 gebildete Elektrowerkzeugmaschine 12 schematisch dargestellt. Der Bohrhammer 28 weist zu einer Generierung eines Schlagimpulses eine nicht näher dargestellte Schlageinheit auf. Mittels der Schlageinheit wird der Schlagimpuls zudem auf ein von einem Bohr- und/oder Meißelwerkzeug gebildetes Werkzeug 30 übertragen, das in einer Werkzeugaufnahme 32 des Bohrhammers 28 gelagert ist. Des Weiteren weist der Bohrhammer 28 eine Gegenschwingungsvorrichtung 10 auf, die zu einer Reduzierung von im Betrieb des Bohrhammers 28 durch die Schlageinheit erzeugten Schwingungen, die sowohl von harmonischen Schwingungen als auch von davon abweichenden Schwingungen, wie beispielsweise nicht harmonischen Schwingungen und/oder einer Überlagerung von mehreren Schwingungen, vorgesehen ist. Die Gegenschwingungsvorrichtung 10 ist hierbei zu einer Reduzierung von Schwingungsbewegungen von insbesondere einem Gehäuse und/oder einem oder mehreren Griffbereichen des Bohrhammers 28 und/oder weiteren, dem Fachmann als sinnvoll erscheinenden Bauteilen des Bohrhammers 28, die vor unerwünschten Schwingungsbewegungen geschützt werden sollen, vorgesehen.

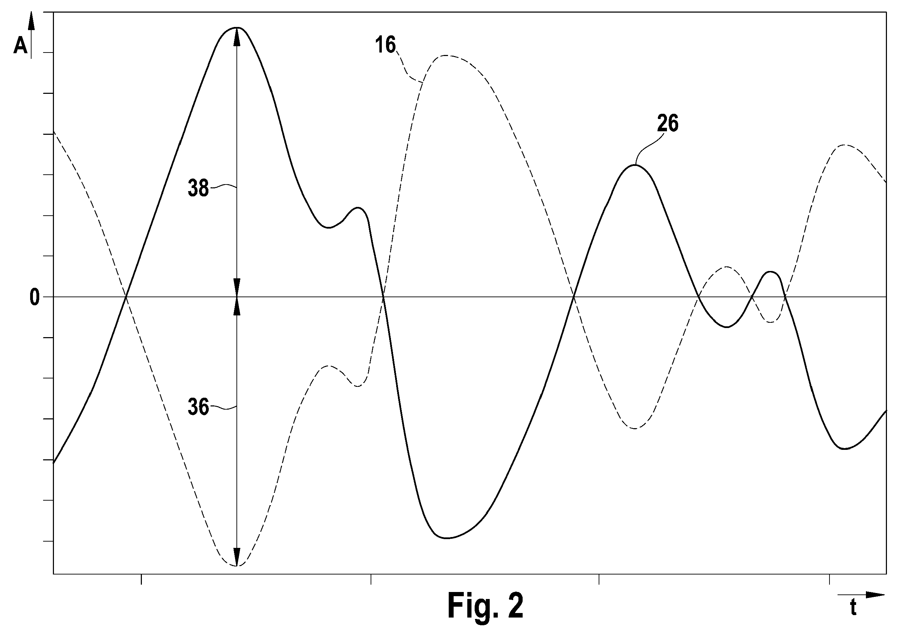

Die Gegenschwingungsvorrichtung 10 weist eine Steuereinheit 14 auf, die zu einer Steuerung einer Gegenschwingungskenngröße vorgesehen ist, wobei die Gegenschwingungskenngröße hierbei von einer Amplitude der Gegenschwingung und/oder einer Frequenz der Gegenschwingung gebildet ist. Die Gegenschwingungskenngröße wird anhand zumindest einer Schwingungskenngröße durch die Steuereinheit 14 festgelegt, wobei die Gegenschwingungskenngröße zu einer zumindest teilweisen Kompensation der Schwingungen, sowohl von harmonischen Schwingungen als auch von davon abweichenden Schwingungen, des Bohrhammers 28 im Wesentlichen invers zu der Schwingungskenngröße ausgebildet ist. Ferner ist die Schwingungskenngröße ebenfalls von einer Amplitude der Schwingung und/oder einer Frequenz der Schwingung gebildet. Die Gegenschwingungskenngröße ist entlang eines zeitlichen Verlaufs der Schwingung der Schwingungskenngröße entgegengerichtet. Zudem kann die Gegenschwingungskenngröße einen im Wesentlichen gleichen Betrag einer Gegenschwingungsamplitude entlang eines zeitlichen Verlaufs der Schwingung wie eine Schwingungsamplitude der Schwingungskenngröße aufweisen. Hierzu ist die Steuereinheit 14 zu einer Bestimmung eines Gegenschwingungsprofils 16 (siehe Figur 2) vorgesehen, das zumindest teilweise von der Gegenschwingungskenngröße über einen längeren zeitlichen Verlauf der Gegenschwingungskenngröße gebildet ist. Das Gegenschwingungsprofil 16 ist hierbei entlang eines zeitlichen Verlaufs im Wesentlichen invers zur Schwingung bzw. einer Schwingungskenngröße und/oder einem Schwingungsprofil 26 (siehe Figur 2) der Schwingung des Bohrhammers 28 ausgebildet, so dass eine zumindest teilweise Schwingungsreduzierung im Betrieb des Bohrhammers 28 erreicht wird.

Des Weiteren weist die Gegenschwingungsvorrichtung 10 eine von einer Linearaktoreinheit 22 gebildete Aktoreinheit 18 auf, die eine Gegenschwingungsmasse 20 aufweist. Zusätzlich zur Gegenschwingungsmasse 20 kann die Aktoreinheit 18 weitere Bauteile, wie beispielsweise federelastische Elemente aufweisen, gegen die die Gegenschwingungsmasse 20 elastisch gelagert bzw. abgestützt ist. Die Aktoreinheit 18 wird von der Steuereinheit 14 im Betrieb der Elektrowerkzeugmaschine 12 bzw. des Bohrhammers 28 zu einer Ausführung einer Gegenschwingung gesteuert. Hierzu ist die Steuereinheit 14 über eine nicht näher dargestellte Datenleitung mit der Aktoreinheit 18 verbunden. Das durch die Steuereinheit 14 bzw. den Steueralgorithmus gesteuerte Gegenschwingungsprofil 16 bzw. die Gegenschwingungskenngröße wird direkt an die Aktoreinheit 18 weitergeleitet, so dass eine besonders schnelle Gegensteuerung zu den Schwingungen, sowohl harmonische Schwingungen als auch davon abweichenden Schwingungen, des Bohrhammers 28 bzw. der Schlageinheit im Betrieb des Bohrhammers 28 erreicht werden kann. Es wird dabei im Betrieb der Elektrowerkzeugmaschine 12 bzw. des Bohrhammers 28 eine Schwingungsreduzierung von mindestens 80 % erreicht.

Die Gegenschwingungsvorrichtung 10 weist eine Sensoreinheit 24 auf, die zu einer Sensierung der Schwingungskenngröße vorgesehen ist. Die von der Sensoreinheit 24 sensierte Schwingungskenngröße wird an die Steuereinheit 14 über die nicht näher dargestellte Datenleitung geleitet. In der Steuereinheit 14 wird über zumindest eine in der Steuereinheit 14 bzw. in dem nicht flüchtigen Speicherelement 34 gespeicherte Kennlinie und/oder ein gespeichertes Kennlinienfeld anhand der sensierten Schwingungskenngröße die Gegenschwingungskenngröße ermittelt. Zudem wird in der Steuereinheit 14 anhand der sensierten Schwingungskenngröße ein Schwingungsprofil 26 des Bohrhammers 28 erstellt und ausgehend von der Schwingungskenngröße bzw. dem Schwingungsprofil 26 ein Gegenschwingungsprofil 16 ermittelt, wobei das Schwingungsprofil 26 zumindest teilweise von einem zeitlichen Verlauf der Gegenschwingungskenngröße gebildet ist. Die in der Steuereinheit 14 ermittelte Gegenschwingungskenngröße bzw. das ermittelte Gegenschwingungsprofil 16 wird daraufhin an die Aktoreinheit 18 weitergegeben und dort eine von der Steuereinheit 14 gesteuerte Gegenschwingung zu einer aktuellen Schwingung des Bohrhammers 28 aktiviert. Das aktuelle Gegenschwingungsprofil 16 bzw. die aktuelle Gegenschwingungskenngröße ist hierbei entlang eines zeitlichen Verlaufs des Schwingungsprofils 26 bzw. der Schwingungskenngröße dem Schwingungsprofil 26 bzw. der Schwingungskenngröße entlang einer Richtung einer Schwingungsausbreitung entgegengerichtet. Zusätzlich ist ein Betrag einer Gegenschwingungsamplitude 36 im Wesentlichen gleich einem Betrag einer Schwingungsamplitude 38, so dass eine möglichst effiziente, sofortige Schwingungsreduzierung bzw. eine Kompensierung der Schwingung, sowohl von harmonischen Schwingungen als auch von davon abweichenden Schwingungen, im Betrieb der Elektrowerkzeugmaschine 12 bzw. des Bohrhammers 28 erreicht wird, wie dies in Figur 2 zu sehen ist.

In Figur 2 ist ein Verlauf des Schwingungsprofils 26 in einer Darstellung einer Amplitude A einer Gesamtschwingung, die sowohl von harmonischen Schwingungen als auch von davon abweichenden Schwingungen gebildet ist, über einen zeitlichen Verlauf t der Schwingung aufgetragen (durchgezogene Linie). Die Amplitude A der Gesamtschwingung ist von einer aufgrund unterschiedlicher Schwingungen verursachten Auslenkung eines Bauteils des Bohrhammers 28, gebildet. Zudem ist in Figur 2 ein von der Steuereinheit 14 mittels der Kennlinie und/oder des Kennlinienfelds gesteuertes Gegenschwingungsprofil 16 bzw. ein Verlauf einer Amplitude der Gegenschwingung gestrichelt dargestellt. Hierbei ist die Gegenschwingungsamplitude 36 über einen zeitlichen Verlauf t der Gegenschwingung aufgetragen. Das Gegenschwingungsprofil 16 ist nahezu invers zu dem aktuellen Schwingungsprofil 26 ausgebildet, so dass eine nahezu vollständige Kompensation der Gesamtschwingung bzw. einer Schwingungsbewegung erreicht wird. Hierbei wird zudem ein sich veränderndes Schwingungsverhalten bzw. Schwingungsprofil 26 im Betrieb der Elektrowerkzeugmaschine 12 berücksichtigt und das Gegenschwingungsprofil 16, gesteuert von der Steuereinheit 14, wird ständig an das aktuelle Schwingungsverhalten bzw. das aktuelle Schwingungsprofil 26 angepasst.

## Patentansprüche

1. Gegenschwingungsvorrichtung für eine Elektrowerkzeugmaschine (12), mit einer Steuereinheit (14), die zu einer Steuerung zumindest einer Gegenschwingungskenngrösse vorgesehen ist, und mit einer Sensoreinheit (24) zur Sensierung einer Schwingungskenngröße,
dadurch gekenzeichnet, dass
die Steuereinheit (14) zumindest eine Kennlinie und/oder ein Kennlinienfeld zu einer Steuerung zumindest einer Gegenschwingungskenngröße aufweist, und dass
die Steuereinheit (14) über die zumindest eine, in einem nicht flüchtigten Speicherelement (34) der Steuereinheit (14) oder in der Steuereinheit (14) gespeicherten Kennlinie und/oder das gespeicherte Kennlinienfeld anhand der sensierten Schwingungskenngröße die Gegenschwingungskenngröße ermittelt und ein Schwingungsprofil (26) der Elektrowerkzeugmaschine (12) zumindest teilweise von einem zeitlichen Verlauf der Gegenschwingungskenngröße erstellt, wobei die Steuereinheit (14) ausgehend von der Schwingungskenngröße bzw. dem Schwingungsprofil (26) ein Gegenschwingungsprofil (16) ermittelt.

2. Gegenschwingungsvorrichtung nach Anspruch 1, **dadurch gekennzeichnet, dass** die Gegenschwingungskenngröße zu einer zumindest teilweisen Kompensation einer Schwingung im Wesentlichen invers zu zumindest einer Schwingungskenngröße ausgebildet ist.

3. Gegenschwingungsvorrichtung nach einem der vorhergehenden Ansprüche, **gekennzeichnet durch** eine Aktoreinheit (18) mit zumindest einer Gegenschwingungsmasse (20).

4. Gegenschwingungsvorrichtung zumindest nach Anspruch 3, **dadurch gekennzeichnet, dass** die Aktoreinheit (18) von einer Linearaktoreinheit (22) gebildet ist.

5. Gegenschwingungsvorrichtung nach einem der vorhergehenden Ansprüche, **dadurch gekennzeichnet, dass** die Steuereinheit (14) zumindest einen Steueralgorithmus aufweist und zumindest eine Gegenschwingungskenngröße mittels des Steueralgorithmus steuerbar ist.

6. Verfahren zu einer zumindest teilweisen Kompensation einer Schwingungskenngröße für eine Gegenschwingungsvorrichtung (10) einer Elektrowerkzeugmaschine (12), wobei eine Gegenschwingungskenngröße von einer Steuereinheit (14) gesteuert wird,
**dadurch gekennzeichnet, dass**
die Gegenschwingungskenngröße von der Steuereinheit (14) zumindest teilweise mittels zumindest einer Kennlinie und/oder einem Kennlinienfeld gesteuert wird, und dass
über die zumindest eine, in einem nicht flüchtigten Speicherelement (34) der Steuereinheit (14) oder in der Steuereinheit (14) gespeicherten Kennlinie und/oder das gespeicherte Kennlinienfeld anhand einer sensierten Schwingungskenngröße die Gegenschwingungskenngröße ermittelt und ein Schwingungsprofil (26) der Elektrowerkzeugmaschine (12) zumindest teilweise von einem zeitlichen Verlauf der Gegenschwingungskenngröße erstellt wird, wobei ausgehend von der Schwingungskenngröße bzw. dem Schwingungsprofil (26) ein Gegenschwingungsprofil (16) ermittelt wird.

7. Verfahren nach Anspruch 6, **dadurch gekennzeichnet, dass** die Gegenschwingungskenngröße teilweise mittels eines Steueralgorithmus gesteuert wird.

## Claims

1. Counter-vibration device for a power tool (12), having a control unit (14) which is provided for the control of at least one counter-vibration parameter, and having a sensor unit (24) for sensing a vibration parameter,
**characterized in that**
the control unit (14) has at least one characteristic curve and/or a characteristic map relating to the control of at least one counter-vibration parameter, and **in that**
via the at least one characteristic curve stored in a non-volatile memory element (34) of the control unit (14) or in the control unit (14) and/or the stored characteristic map, the control unit (14) determines the counter-vibration parameter by using the vibration parameter that is sensed, and creates a vibration profile (26) of the power tool (12) at least partly from a variation of the counter-vibration parameter over time, wherein the control unit (14) determines a counter-vibration profile (16) on the basis of the vibration parameter or the vibration profile (26).

2. Counter-vibration device according to Claim 1, **characterized in that** the counter-vibration parameter is designed for at least partial compensation of a vibration substantially inversely with respect to at least one vibration parameter.

3. Counter-vibration device according to one of the preceding claims, **characterized by** an actuator unit (18) having at least one counter-vibration mass (20).

4. Counter-vibration device at least according to Claim 3, **characterized in that** the actuator unit (18) is formed by a linear actuator unit (22).

5. Counter-vibration device according to one of the preceding claims, **characterized in that** the control unit (14) has at least one control algorithm, and at least one counter-vibration parameter can be controlled by means of the control algorithm.

6. Method for at least partially compensating a vibration parameter for a counter-vibration device (10) of a power tool (12), a counter-vibration parameter being controlled by a control unit (14), **characterized in that**
the counter-vibration parameter is controlled by the control unit (14) at least partly by means of at least one characteristic curve and/or a characteristic map, and **in that**
via the at least one characteristic curve stored in a non-volatile memory element (34) of the control unit (14) or in the control unit (14) and/or the stored characteristic map, the counter-vibration parameter is determined by using a vibration parameter that is sensed, and a vibration profile (26) of the power tool (12) is at least partly created from a variation of the counter-vibration parameter over time, wherein a counter-vibration profile (16) is determined on the basis of the vibration parameter or the vibration profile (26).

7. Method according to Claim 6, **characterized in that** the counter-vibration parameter is partly controlled by means of a control algorithm.

## Revendications

1. Ensemble de contre-oscillation pour machine-outil électrique (12), l'ensemble présentant une unité de commande (14) prévue pour commander au moins une grandeur caractéristique de la contre-oscillation et une unité de capteur (24) qui capte une grandeur caractéristique de l'oscillation,
**caractérisé en ce que**
l'unité de commande (14) présente au moins une ligne caractéristique et/ou un champ de lignes caractéristiques permettant de commander au moins une grandeur caractéristique de la contre-oscillation, et
**en ce que** par l'intermédiaire de la ou des lignes caractéristiques et/ou du champ dé lignes caractéristiques conservés en mémoire dans un élément (34) de mémoire non volatile de l'unité de commande (14) ou dans l'unité de commande (14), à l'aide de la grandeur caractéristique d'oscillation qui a été captée, l'unité de commande (14) détermine la grandeur caractéristique de la contre-oscillation et établit un profil d'oscillation (26) de la machine-outil électrique (12) au moins en partie à partir de l'évolution en fonction du temps de la grandeur caractéristique de la contre-oscillation, l'unité de commande (14) commandant un profil (16) de contre-oscillation à partir de la grandeur caractéristique d'oscillation ou du profil d'oscillation (26).

2. Ensemble de contre-oscillation selon la revendication 1, **caractérisé en ce que** la grandeur caractéristique de la contre-oscillation est configurée pour compenser au moins partiellement une oscillation essentiellement en sens inverse de la ou des grandeurs caractéristiques d'oscillation.

3. Ensemble de contre-oscillation selon l'une des revendications précédentes, **caractérisé par** une unité d'actionneur (18) qui présente au moins une masse (20) de contre-oscillation.

4. Ensemble de contre-oscillation selon au moins la revendication 3, **caractérisé en ce que** l'unité d'actionneur (18) est formée par une unité (22) d'actionneur linéaire.

5. Ensemble de contre-oscillation selon l'une des revendications précédentes, **caractérisé en ce que** l'unité de commande (14) présente au moins un algorithme de commande et **en ce qu'**au moins une grandeur caractéristique de la contre-oscillation peut être commandée au moyen de l'algorithme de commande.

6. Procédé de compensation au moins partielle d'une grandeur caractéristique d'oscillation d'un ensemble (10) de contre-oscillation d'une machine-outil électrique (12), dans lequel une grandeur caractéristique de contre-oscillation est commandée par une unité de commande (14),
**caractérisé en ce que**
la grandeur caractéristique de contre-oscillation est commandée par l'unité de commande (14) au moins en partie au moyen d'au moins une ligne caractéristique et/ou d'un champ de lignes caractéristiques et **en ce que** par l'intermédiaire d'au moins une grandeur caractéristique et/ou d'un champ de lignes caractéristiques conservés en mémoire dans un élément (34) de mémoire non volatile de l'unité de commande (14) ou dans l'unité de commande (14), à l'aide d'une grandeur caractéristique d'oscillation qui a été captée, la grandeur caractéristique de contre-oscillation est déterminée et un profil d'oscillation (26) de la machine-outil électrique (12) est établi au moins en partie à partir de l'évolution par rapport au temps de la grandeur caractéristique de la contre-oscillation, un profil (16) de contre-oscillation étant déterminé à partir de la grandeur caractéristique d'oscillation ou du profil d'oscillation (26).

7. Procédé selon la revendication 6, **caractérisé en ce que** la grandeur caractéristique de contre-oscillation est commandée en partie au moyen d'un algorithme de commande.
